# EUROPEAN PATENT APPLICATION

(11) **EP 4 181 614 A1**
(43) Date of publication of application: **17.05.2023**
(21) Application number: 21838436.0
(22) Date of filing: 25.06.2021
(51) Int. Cl.: H04W 76/10, H04W 40/22, H04W 40/12

(54) **COMMUNICATION METHOD AND DEVICE, AND STORAGE MEDIUM**

(30) Priority: 09.07.2020 CN 202010657310
(71) Applicant: Spreadtrum Semiconductor (Nanjing) Co., Ltd., Nanjing, Jiangsu 211899 (CN)
(72) Inventor: CAO, Chunyan, Nanjing, Jiangsu 210000 (CN); LIU, Xing, Nanjing, Jiangsu 210000 (CN)
(74) Representative: Pfenning, Meinig & Partner mbB
(86) International application number: PCT/CN2021/102273
(87) International publication number: WO 2022/007647

(57) **Abstract**

The present application provides a communication method, a device, and a storage medium. The method includes: sending by a first terminal device, a solicitation message, where the solicitation message includes a measurement threshold; and receiving, by the first terminal device, a response message sent by at least one second terminal device, where a signal measurement result of a link between the second terminal device and the first terminal device is greater than or equal to the measurement threshold. According to the method of the embodiment of the present application, signaling of Relay UE for returning an invalid response message may be reduced, thereby reducing unnecessary signaling overhead of a network and avoiding network interference and congestion.

## Description

This application claims priority to Chinese Patent Application No. 202010657310.6, filed to China National Intellectual Property Administration on July 9, 2020, and entitled "Communication Method, Device, and Storage Medium", the disclosure of which is hereby incorporated by reference in its entirety.

### TECHNICAL FIELD

The present application relates to the field of communication technology, and in particular, to a communication method, a device, and a storage medium.

### BACKGROUND

With the development of communication technology, proximity-based service (Proximity-based Service, ProSe) direct communication has been introduced to long term evolution (Long Term Evolution, LTE). User Equipment UE A may directly communicate with UE B (which may be multiple pieces of UE) through a PC5 interface. The PC5 interface is a direct interface between the UE. The service and system aspects (Service and System Aspects, SA) work group (Work Group, WG2) of the 3rd Generation Partnership Project (3rd Generation Partnership Project, 3GPP) introduces a UE-to-network relay (Relay) communication architecture and a UE-to-UE Relay communication architecture when researching system architectures for ProSe direct communication. By the UE-to-network Relay architecture, UE A incapable of directly communicating with a base station may Relay service data through other UE B (relay user, Relay UE) to implement direct communication. By the UE-to-UE Relay communication architecture, UE A and UE B incapable of directly communicating through a PC5 link may relay service data through other UE (Relay UE) to implement direct communication.

For the UE-to-network Relay communication architecture and the UE-to-UE Relay communication architecture, remote UE (Remote UE) intended to communicate through Relay UE is required to perform a Relay discovery process first, namely the Remote UE discovers Relay UE around. There are two Relay discovery models: model A and model B. A principle of model A is that: Relay UE periodically broadcasts a Relay discovery message, and Remote UE requiring Relay service around may discover whether there is Relay LTE nearby only by monitoring a broadcast message. A principle of model B is that: Remote UE sends a solicitation message (Solicitation message) to Relay UE around, and the Relay UE return response messages (Response message) to the Remote UE after receiving the solicitation message. In a model B based Relay discovery process, the Remote UE sends the solicitation message to the Relay UE nearby, and if all Relay UE returns Response messages, there may be brought unnecessary interference and congestion. Particularly when the Remote UE performs Relay discovery in model B in a scenario of handover between different BSs, if all Relay UE returns response messages, there may be brought unnecessary interference and congestion.

### SUMMARY

The present application provides a communication method, a device, and a storage medium, so as to reduce response messages returned by Relay UE and further reduce interference and congestion.

In a first aspect, the present application provides a communication method, including:
sending, by a first terminal device, a solicitation message, the solicitation message including a measurement threshold; and
receiving, by the first terminal device, a response message sent by at least one second terminal device, a signal measurement result of a link between the second terminal device and the first terminal device being greater than or equal to the measurement threshold.

In a second aspect, the present application provides a communication method, including:
receiving, by a second terminal device, a first message from a first terminal device, the first message including a measurement threshold;
measuring by the second terminal device, the first message to obtain a measurement result corresponding to the first terminal device; and
sending, by the second terminal device, a response message to the first terminal device if the measurement result corresponding to the first terminal device is greater than or equal to the measurement threshold.

In a third aspect, the present application provides a communication method, including:
receiving by a first network device, a measurement report message sent by a first terminal device, the measurement report message including identification information of at least one third terminal device and identification information of a second network device that each third terminal device belongs to, and the third terminal device being a terminal device serving as a candidate relay in at least one second terminal device; and
determining by the first network device, a target relay terminal device from the at least one third terminal device.

In a fourth aspect, an embodiment of the present application provides a first terminal device, including:
a processor, a memory, and an interface for communication with other devices;
the memory stores a computer-executable instruction; and
the processor executes the computer-executable instruction stored in the memory to enable the processor to perform the method as described in any one of the first aspect.

In a fifth aspect, an embodiment of the present application provides a second terminal device, including:
a processor, a memory, and an interface for communication with other devices;
the memory stores a computer-executable instruction; and
the processor executes the computer-executable instruction stored in the memory to enable the processor to perform the method as described in any one of the second aspect.

In a sixth aspect, an embodiment of the present application provides a first network device, including:
a processor, a memory, and an interface for communication with other devices.
the memory stores a computer-executable instruction; and
the processor executes the computer-executable instruction stored in the memory to enable the processor to perform the method as described in any one of the third aspect.

In a seventh aspect, an embodiment of the present application provides a computer-readable storage medium, storing a computer program which, when executed by a processor, implements the method as described in any one of the first aspect, the second aspect, and the third aspect.

According to the communication method, the device, and the storage medium provided in the embodiments of the present application, a first terminal device sends a solicitation message, the solicitation message including a measurement threshold; and the first terminal device receives a response message sent by at least one second terminal device, a signal measurement result of a link between the second terminal device and the first terminal device being greater than or equal to the measurement threshold. Other second terminal devices whose signal measurement results of links with the first terminal device are less than the measurement threshold are not required to return response messages. Therefore, the number of returned response messages is reduced, and interference and network congestion may be further reduced.

### BRIEF DESCRIPTION OF DRAWINGS

The accompanying drawings, which are incorporated in and constitute a part of this specification, illustrate embodiments consi stent with the present disclosure and, together with the specification, serve to explain the principle of the present disclosure.
FIG. 1 is a diagram of an application scenario according to an embodiment of the present application.
FIG. 2 is a schematic diagram of relay discovery according to an embodiment of the present application.
FIG. 3 is an interactive flow chart of handover between base stations according to an embodiment of the present application.
FIG. 4 is a flow chart of an embodiment of a communication method according to the present application.
FIG. 5 is an interactive flow chart of an embodiment of a communication method according to the present application.
FIG. 6 is a flow chart of another embodiment of a communication method according to the present application.
FIG. 7 is a flow chart of still another embodiment of a communication method according to the present application.
FIG. 8 is a schematic structural diagram of an embodiment of a first terminal device according to the present application.
FIG. 9 is a schematic structural diagram of an embodiment of a second terminal device according to the present applicati on.
FIG. 10 is a schematic structural diagram of an embodiment of a first network device according to the present application.
FIG. 11 is a schematic structural diagram of another embodiment of a first terminal device according to the present application.
FIG. 12 is a schematic structural diagram of another embodi ment of a second terminal device according to the present application.
FIG. 13 is a schematic structural diagram of another embodiment of a first network device according to the present application.

### DESCRIPTION OF EMBODIMENTS

Exemplary embodiments will now be described in detail, examples of which are represented in the drawings. When the following descriptions involve the drawings, the same numerals in different drawings represent the same or simil ar elements, unless otherwise indicated. Implementations described in the following exemplary embodiments do not represent all implementations consistent with the present disclosure. Instead, they are merely examples of an apparatus and a method consistent with some aspects of the present disclosure described in detail in the appended claims.

Terms "include" and "have" in the specification, claims, and drawings of the present application and any transformation thereof are intended to cover nonexclusive inclusions. For example, a process, a method, a system, a product, or a device including a series of steps or units is not limited to the listed steps or units but optionally further includes steps or units which are not listed, or optionally further includes other steps or units intrinsic to the process, the method, the product, or the device.

It is to be understood that term "and/or" herein is only an association relationship describing associated objects and represents that there may be three relationships. For example, A and/or B may represent three conditions: existence of only A, existence of both A and B, and existence of only B. In addition, character "/" herein represents an "or" relationship of previous and next associated objects.

"Connect" appearing in the embodiments of the present application refers to various connection manners such as direct connection or indirect connection, so as to implement communication between devices. No limits are made thereto in the embodiments of the present application.

"Network" and "system" appearing in the embodiments of the present application express the same concept. A communication system is a communication network.

"Multiple" appearing in the embodiments of the present application refers to two or more than two.

First of all, terms and application scenarios involved in the present application are introduced.

In the embodiments of the present application, a terminal device may refer to user equipment (user equipment, LTE), an access terminal, a user unit, a user station, a mobile radio station, a mobile station (mobile station, MS), a remote station, a remote terminal, a mobile device, a user terminal, terminal equipment (terminal equipment), a wireless communication device, a user agent, or a user apparatus. The terminal device may also be a cell phone, a cordless phone, a session initiation protocol (Session Initiation Protocol SIP) phone, a wireless local loop (Wireless Local Loop, WLL) station, a personal digital processing (Personal Digital Assistant, PDA), a handheld device with a wireless communication function, a computing device or other processing devices connected to a wireless modem, a vehicle device, a wearable device, a terminal device in a future 5G network, a terminal device in a future evolved public land mobile network (Public Land Mobile Network, PLMN), etc. No limits are made thereto in the embodiments of the present application.

In the embodiments of the present application, a network device may refer to as a base station (base station, BS), also referred to as a base station device, and is an apparatus deployed in a radio access network to provide a wireless communication function. For example, a device providing a base station function in a 2G network includes a base transceiver station (English: base transceiver station, BTS for short) and a base station controller (base station controller, BSC); a device providing a base station function in a 3G network includes a NodeB (NodeB) and a radio network controller (radio network controller, RNC); a device providing a base station function in a 4G network includes an evolved NodeB (evolved NodeB, eNB); a device providing a base station function in wireless local area networks (wireless local area networks, WLAN) is an access point (access point, AP); and a device providing a base station function in 5G new radio (New Radio, NR) includes a next-generation NodeB (gNB), a device providing a base station function in a future new communication system, etc.

The following several communication architectures may be used for ProSe direct communication.

A UE-to-network Relay communication architecture: by this architecture, UE A incapable of directly communicating with a base station may relay service data through other UE B (Relay UE) to implement direct communication; and

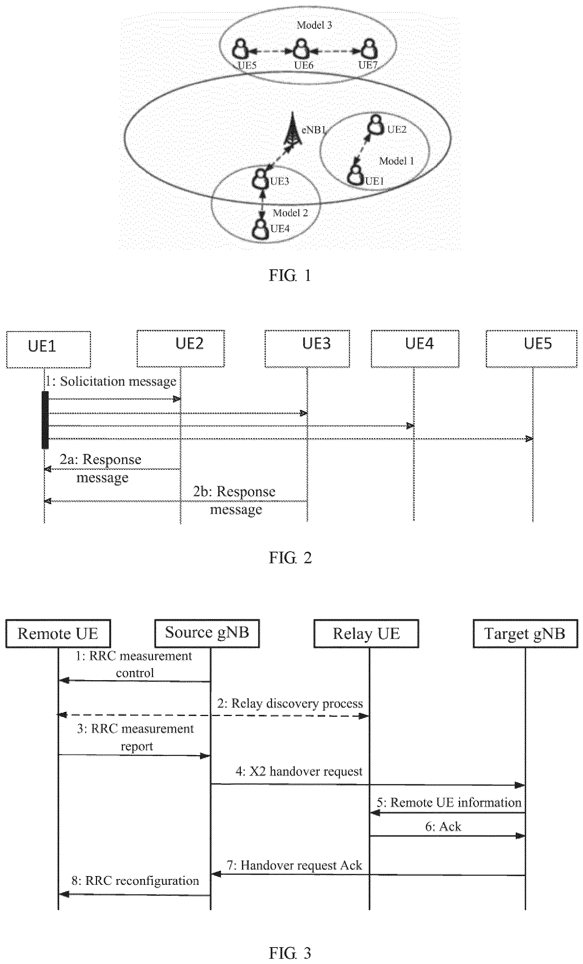

A UE-to-UE Relay communication architecture: by this architecture, UE A and UE B incapable of directly communicating through a PC5 link may relay service data through other UE (Relay UE) to implement direct communication. As shown in FIG. 1, model 1 refers to direct communication between UE1 and UE2; model 2 refers to communication between UE4 and eNB1 through Relay UE3; and model 3 refers to communication between UE5 and UE7 through Relay UE6.

Remote UE (Remote UE) communicating through Relay UE (Relay UE) is required to perform a Relay discovery process first. A purpose of this process is to enable the Remote UE to discover Relay UE around. There are two Relay discovery models: model A and model B. A principle of model A is that: Relay UE periodically broadcasts a Relay discovery message, and Remote UE requiring Relay service around may discover whether there is Relay UE nearby only by monitoring a broadcast message. A principle of model B is that: Remote LTE sends a solicitation message (Solicitation message) to Relay UE around, such as sending the solicitation message through a broadcast message, and the Relay UE return response messages (Response message) to the Remote UE after receiving the solicitation message.

In a current protocol, the Solicitation message contains: 1: Discoverer Info: providing information about a discoverer user, specifically referring to information about the Remote LTE; 2: Relay Service Code: information of interest of the remote UE about connection, configured in related connection service in the Remote UE; and 3: ProSe Relay UE ID: which is optional, referring to a UE-to-network link layer identifier used for direct communication and associated with a Relay Service Code. For each Relay Service Code, a UE-to-network Relay has a different ProSe Relay UE ID.

The Response message contains: 1: ProSe Relay UE ID: referring to a direct communication link layer ID associated with the Relay Service Code, where the Relay UE has a unique ProSe Relay UE ID for each Relay Service Code; and 2: Discoveree Info: providing information about discovery, specifically referring to information about the Relay UE.

In a model B based Relay discovery process, the Remote UE sends the Solicitation message to the Relay UE nearby, and if all Relay UE returns Response messages, there may be brought unnecessary interference and congestion. As shown in FIG. 2, UE1 sends a solicitation message to UE2, UE3, UE4, and UE5. UE capable of serving as Relay UE, such as UE2 and UE3, send a response message to UE1. UE4 and UE5 may not be Relay UE, and do not respond to the solicitation message.

In the related art, a base station directly configures a reference signal receiving power (Reference Signal Receiving Power, RSRP) threshold for Relay UE to determine whether to return a Response message. The Relay UE compares actually measured signal strength, i.e., an RSRP value, of a PC5 link between the Relay UE and Remote UE with the RSRP threshold configured by the base station, returns the Response message if the actually measured RSRP value is greater than the RSRP threshold configured by the base station, otherwise does not return any Response message. In this solution, the Remote UE and the Relay UE are under the same base station. As shown in FIG. 3, in a scenario of handover of the Remote UE between different base stations, the Remote UE and the Relay UE are under different base stations, and the Relay UE belongs to a base station that the Remote UE is to be handed over to. An RSRP threshold for the Relay UE to determine whether to return a Response message is configured by the base station that the Relay UE belongs to, an RSRP threshold for handover measurement of the Remote UE is configured by a base station that the Remote UE belongs to, and the two thresholds may be different. Therefore, it is relatively hard to make a decision subsequently, and no proper Relay UE may be found for the Remote UE.

As shown in FIG. 3, during model B based relay discovery in this scenario, when the Remote UE moves to an edge of coverage of the current serving base station, and the serving base station or Relay UE under the serving base station is unable to provide reliable communication service for the Remote UE, the serving base station may configure different RSRP thresholds for different Remote UE for handover measurement through dedicated signaling (such as Radio Resource Control (Radio Resource Control, RRC) signaling). After receiving measurement configuration signaling of the base station, the Remote UE performs Relay discovery to find Relay LTE of another base station capable of providing service, measures an RSRP value of a PC5 link between the Remote UE and the found Relay UE, and reports candidate Relay UE corresponding to an RSRP value greater than the threshold to the serving base station (for example, reporting through an RRC measurement report). The base station selects the best Relay UE according to the candidate Relay UE reported by the Remote UE. Finally, the source base station performs a handover process with a target base station that the selected Relay UE belongs to. In the handover measurement reporting process, the Remote UE may only report UE satisfying that actual RSRP with the candidate Relay UE is greater than the RSRP threshold configured by the base station. Therefore, during Relay discovery, if all the Relay UE (satisfying and not satisfying that the RSRP is greater than the threshold) replies the Remote UE, the Relay UE not satisfying the condition actually returns invalid response information, resulting in network interference and congestion because the Remote UE may not report such Relay UE.

Therefore, when the Remote UE performs Relay discovery during Relay handover between base stations, the Remote UE sends a Solicitation message to Relay UE of base stations nearby, and if all the Relay UE returns Response messages, there may be brought unnecessary interference and congestion. A method in the embodiments of the present application aims to solve the problem of how to reduce unnecessary response messages.

A communication interface between a first terminal device and a second terminal device may be a PC5 interface.

A communication interface between a first network device and a second network device may be an X2 interface.

The technical solution provided in the present application is also applicable to other different network architectures, including, but not limited to, a relay network architecture, a dual connectivity architecture (such as 5G and LTE dual connectivity architecture), and a vehicle-to-everything communication (Vehicle-to-Everything ) architecture.

The technical concept of the communication method in the embodiments of the present application is as follows:
the first terminal device sends a solicitation message for relay discovery, where the solicitation message carries a measurement threshold, and the measurement threshold is a measurement threshold for handover of the first terminal device. A second terminal device sends a response message if determining, according to the measurement threshold of the first terminal device, that a signal measurement result of a link with the first terminal device is greater than or equal to the measurement threshold, otherwise, it is not required to send any response message. Unnecessary response messages are reduced, and interference and network congestion may be further reduced.

The technical solution of the present application will be described below in detail with specific embodiments. The following several specific embodiments may be combined with each other. The same or similar concepts or processes will not be elaborated in some embodiments.

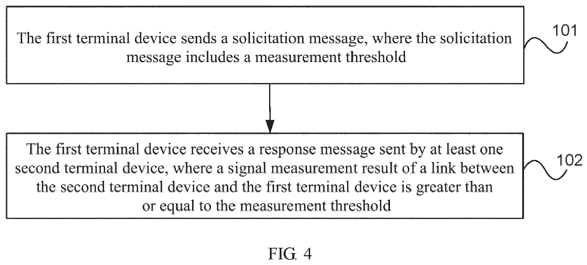

FIG. 4 is a flow chart of an embodiment of a communication method according to the present application. As shown in FIG. 4, the method provided in the present embodiment includes the following steps.

In step 101, a first terminal device sends a solicitation message, where the solicitation message includes a measurement threshold.

Specifically, a first terminal device sends a solicitation message to one or more second terminal devices nearby, where the solicitation message carries a measurement threshold. The first terminal device serves as Remote UE, and the second terminal device may be candidate Relay UE.

In an embodiment, the solicitation message may be sent by broadcasting.

The measurement threshold includes a reference signal receiving power RSRP threshold or a reference signal receiving quality (Reference Signal Receiving Quality, RSRQ) threshold.

If the measurement threshold is the RSRP threshold, a corresponding signal measurement result is RSRP.

If the measurement threshold is the RSRQ threshold, a corresponding signal measurement result is RSRQ.

In an embodiment, the measurement threshold may be configured for the first terminal device, by a first network device (i.e., a source base station) that the first terminal device belongs to. The measurement threshold is a threshold for handover measurement of the first terminal device.

The solicitation message may be, but not limited to, the Solicitation message, and may also be referred to as another message name in other embodiments, and no limits are made thereto in the present application.

In step 102, the first terminal device receives a response message sent by at least one second terminal device, where a signal measurement result of a link between the second terminal device and the first terminal device is greater than or equal to the measurement threshold.

Specifically, the second terminal device receives the solicitation message, obtains, according to the solicitation message, a signal measurement result, such as an RSRP value or an RSRQ value, of a wireless link with the first terminal device by measurement, and sends a response message to the first terminal device if the signal measurement result is greater than or equal to the measurement threshold.

In an embodiment, the response message includes identification information of the second terminal device and identification information of a second network device that the second terminal device belongs to.

In an embodiment, in order to further reduce unnecessary response messages, a load of the second terminal device is less than a maximum load threshold.

In an embodiment, the load of the second terminal device is the number of remote terminal devices currently served by the second terminal device, and the maximum load threshold is the maximum number of remote terminal devices supported and born by the second terminal devices, i.e., the maximum number of remote terminal devices that the second terminal device is allowed by its resources to serve.

Specifically, before sending the response message to the first terminal device in response to determining that the measurement result is greater than or equal to the measurement threshold, the second terminal device may further determine whether the second terminal device is relatively low in load and capable of providing service for the first terminal device.

That is, it is determined that the load of the second terminal device is less than the maximum load threshold. For example, the number of remote terminal devices currently served by the second terminal device is three, and the maximum number of remote terminal devices supported and born by the second terminal devices is six, namely the second terminal device may provide service for at most six remote terminal devices. In such case, the second terminal device may serve three more first terminal devices, indicating that the current load is relatively low, and returns the response message.

In an embodiment, different Relay UE may have different load capacities, namely maximum load thresholds for different Relay UE may be different.

The response message may be, but not li mited to, Response message, and may also be referred to as another message name in other embodiments, and no limits are made thereto in the present application.

Further, after the response message is received, one second terminal device may be selected as a relay, and a connection with the second terminal device is established. The first terminal device implements communication with another terminal device or a second network device that the second terminal device belongs to through the second terminal device selected as the relay.

In the above solution, signaling of Relay UE for returning invalid response messages may be reduced, namely response messages returned by second terminal devices whose signal measurement results of links with the first terminal devices are less than the measurement threshold are reduced, and these second terminal devices do not serve as relays. Therefore, unnecessary signaling overhead of a network is reduced, and network interference and congestion are avoided.

According to the communication method of the present embodiment, the first terminal device sends the solicitation message, where the solicitation message includes the measurement threshold; and the first terminal device receives the response message sent by the at least one second terminal device, where the signal measurement result of the link between the second terminal device and the first terminal device is greater than or equal to the measurement threshold. Another second terminal device whose signal measurement result of a link with the first terminal device is less than the measurement threshold is not required to return any response message. Therefore, the number of returned response messages is reduced, and interference and network congestion may be further reduced.

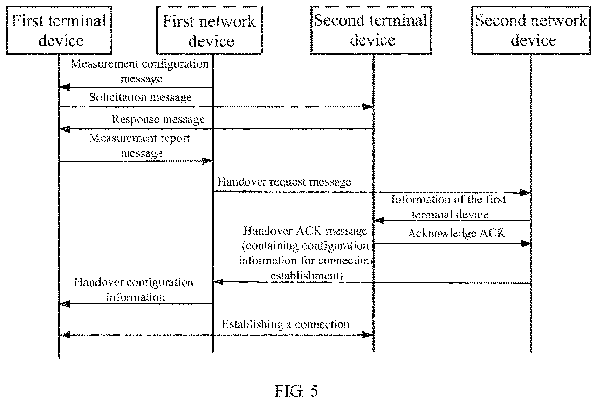

In an embodiment, as shown in FIG. 5, before step 101, the following operation may be further performed:
the first terminal device receives a measurement configuration message from a first network device, where the measurement configuration message includes the measurement threshold.

Specifically, the first network device sends a measurement configuration message to the first terminal device in a connected state, where the measurement configuration message carries the measurement threshold for relay discovery. The first network device sends measurement configuration information to the first terminal device belonging to the first network device. Where the measurement threshold may be different for different first terminal devices.

Further, optionally, the measurement configuration message further includes at least one of a first triggering condition of performing relay discovery and a second triggering condition of reporting a candidate second terminal device.

The measurement configuration message includes, but not limited to, the measurement threshold configured for relay discovery of the first terminal device, a first triggering condition of performing relay discovery by the first terminal device, and a second triggering condition of reporting a candidate second terminal device by the first terminal device.

In an embodiment, the first triggering condition includes that signal quality of a serving cell of the first terminal device is less than a first quality threshold.

In an embodiment, the second triggering condition includes that link quality between the first terminal device and the first network device is less than a second quality threshold.

After receiving the response message sent by the at least one second terminal device, the first terminal device may periodically report information of the candidate second terminal device, or may be triggered by an event to report information of the candidate second terminal device.

For example, the information of the candidate second terminal device is reported if the second triggering condition is satisfied. For example, the information of the candidate second terminal device is reported in response to determining that the link quality with the first network device is less than the second quality threshold, such that the first network device hands the first terminal device over to a network device that a target relay terminal device belongs to.

In an embodiment, the first terminal device sends the solicitation message in response to determining that the first triggering condition is satisfied.

Specifically, the first terminal device may be triggered to perform a relay discovery process according to an event configured by the first network device for preforming a relay discovery, for example, the signal quality of the serving cell is less than a configured first quality threshold.

In other embodiments, performing the relay discovery may be triggered according to another event, and no limits are made thereto in the present application.

The first terminal device sends the solicitation message in a relay discovery process after receiving the measurement configuration message. For example, the solicitation message is sent in response to determining that the first triggering condition of performing relay discovery is satisfied.

In the above-mentioned implementation, the first network device configures the measurement threshold for relay discovery, the triggering condition of performing relay discovery, the triggering condition of reporting a candidate relay, etc., for the first terminal device through the measurement configuration message, and the first terminal device performs relay discovery according to the information configured in the measurement configuration message.

In an embodiment, as shown in FIG. 5, in order to determine target Relay UE and establish a communication connection with the target Relay UE, after step 102, the method may further include the following step:
the first terminal device sends a measurement report message to the first network device, where the measurement report message includes identification information of at least one third terminal device and identification information of a second network device that each third terminal device belongs to, and the third terminal device being a terminal device serving as a candidate relay in the at least one second terminal device.

Specifically, the first terminal device reports information of a terminal device serving as a candidate relay to the first network device through a measurement report message. The information of the terminal device serving as the candidate relay includes, but not limited to, identification information of all third terminal devices serving as candidate relays and identification information of second network devices where the third terminal devices are located. The third terminal device selected as the candidate relay refers to one or more of second terminal devices from which the first terminal device receives response messages.

The first network device selects one or more third terminal devices as target relay terminal devices for a handover request process according to the information of the third terminal devices serving as the candidate relays.

In an embodiment, the first terminal device sends the measurement report message in response to determining that the second triggering condition is satisfied.

Further, the measurement report message further includes a measurement result corresponding to each third terminal device.

The first network device may select the target relay terminal device on the basis of selecting a third terminal device corresponding to a relatively good measurement result. For example, the candidate third terminal devices are sequenced in a descending order according to RSRP value, and the first third terminal device or the first N third terminal devices are selected, where N is an integer greater than 1.

In an embodiment, before the first terminal device sends the measurement report message to the first network device, the following operation may be further performed:
the first terminal device measures the response message sent by the at least one second terminal device to determine a measurement result corresponding to each second terminal device.

Specifically, the first terminal device may measure a wireless link between the first terminal device and the second terminal device according to the response message sent by the second terminal device, to obtain a corresponding measurement result.

The first terminal device may report all second terminal devices sending response messages to the first network device as candidate third terminal devices, or select part of them for reporting to the first network device.

In an embodiment, the first terminal device determines the at least one third terminal device according to the measurement result corresponding to each second terminal device and the measurement threshold.

Specifically, the second terminal device whose measurement result is greater than or equal to the measurement threshold may be determined as a candidate third terminal device.

For example, the measurement results corresponding to the second terminal devices may be sequenced, and the second terminal device whose measurement result is greater than or equal to the measurement threshold is selected.

In other embodiments, the first terminal may select and report the target relay terminal device to the first network device, and the first network device directly performs the handover request process without performing a process of determining the target relay terminal device.

In an embodiment, for example, if the first terminal device reports one candidate third terminal device, the first network device directly performs the handover request process without decision making.

In the above-mentioned implementation, the first terminal device reports the information of the third terminal device serving as the candidate relay to the first network device, the first network device selects the target relay terminal device, and the first terminal device is not required to make a decision. Therefore, the power consumption of the first terminal device is reduced.

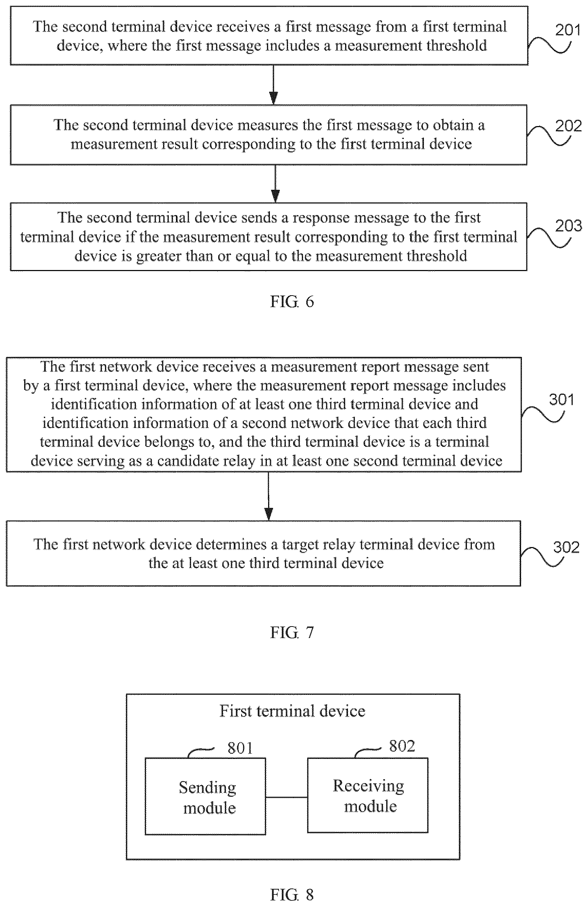

FIG. 6 is a flow chart of another embodiment of a communication method according to the present application. An executive entity of the present embodiment is a second terminal device, i.e., Relay UE. As shown in FIG. 6, the method provided in the present embodiment includes the following.

Step 201, the second terminal device receives a first message from a first terminal device, where the first message includes a measurement threshold.

Step 202, the second terminal device measures the first message to obtain a measurement result corresponding to the first terminal device.

Step 203, the second terminal device sends a response message to the first terminal device if the measurement result corresponding to the first terminal device is greater than or equal to the measurement threshold.

In an embodiment, the measurement result includes reference signal receiving power RSRP or reference signal receiving quality RSRQ.

An implementation principle and technical effects of the method of the present embodiment are similar to those of the method for the first terminal side, and will not be elaborated herein.

FIG. 7 is a flow chart of still another embodiment of a communication method according to the present application. An executive entity of the present embodiment is a first network device, i.e., a network device that a first terminal device (Remote UE) belongs to. As shown in FIG. 7, the method provided in the present embodiment includes the following.

Step 301, the first network device receives a measurement report message sent by a first terminal device, where the measurement report message includes identification information of at least one third terminal device and identification information of a second network device that each third terminal device belongs to, and the third terminal device is a terminal device serving as a candidate relay in at least one second terminal device.

The second terminal device is a terminal device that sends a response message to the first terminal device.

Step 302, the first network device determines a target relay terminal device from the at least one third terminal device.

In an embodiment, the measurement report message further includes a measurement result corresponding to each third terminal device. The first network device determines a target relay terminal device from the at least one third terminal device includes:
the first network device determines the target relay terminal device from the at least one third terminal device according to the measurement result corresponding to each third terminal device.

In an embodiment, the determining the target relay terminal device from the at least one third terminal device includes:
the first network device determines the third terminal device corresponding to the maximum measurement result as the target relay terminal device.

An implementation principle and technical effects of the method of the present embodiment are similar to those of the method for the first terminal side, and will not be elaborated herein.

In an embodiment, as shown in FIG. 5, the first network device sends a handover request message to a network device that the target relay terminal device belongs to, i.e., a second network device, after determining the target relay terminal device, where the handover request message includes, but not limited to, identification information of the first terminal device, identification information of the first network device, and identification information of the target relay terminal device.

After receiving the handover request message, the second network device obtains the identification information of the target relay terminal device, and then sends a handover acknowledgment request message to the target relay terminal device, where the handover acknowledgment request message includes, but not limited to, the identification information of the first terminal device.

If agreeing to serve the first terminal device, namely agreeing to serve as a relay of the first terminal device, the target relay terminal device sends an acknowledgment ACK message to the second network device.

The second network device receives the acknowledgment ACK message, and sends a handover acknowledgment message to the first network device. The handover ACK message may include, but not limited to, configuration information for establishing a connection between the first terminal device and the target relay terminal device.

After receiving the handover acknowledgment message, the first network device sends a handover configuration message, such as RRC reconfiguration information, to the first terminal device.

After receiving the handover configuration message, the first terminal device establishes a connection with the target relay terminal device, namely implementing handover to Relay UE of the second network device, to complete handover. In the present embodiment, the target relay terminal device is one of second terminal devices that send response messages.

In the above-mentioned implementation mode, the first terminal device sends the solicitation message, where the solicitation message includes the measurement threshold; and the first terminal device receives the response message sent by the at least one second terminal device, where the signal measurement result of the link between the second terminal device and the first terminal device is greater than or equal to the measurement threshold. Another second terminal device whose signal measurement result of a link with the first terminal device is less than the measurement threshold is not required to return any response message. Therefore, the number of returned response messages is reduced, and interference and network congestion may be further reduced. The first terminal device finally establishes a connection with the target relay terminal device serving as a relay, where the target relay terminal device is one of second terminal devices that return response messages, and the first terminal device implements communication with the second network device and other terminal devices through the target relay terminal device.

FIG. 8 is a structural diagram of an embodiment of a first terminal device according to the present application. As shown in FIG. 8, the first terminal device of the present embodiment includes:
a sending module 801, configured to send a solicitation message, where the solicitation message includes a measurement threshold; and
a receiving module 802, configured to receive a response message sent by at least one second terminal device, where a signal measurement result of a link between the second terminal device and the first terminal device is greater than or equal to the measurement threshold.

In a possible implementation, the receiving module 802 is further configured to:
receive a measurement configuration message from a first network device before the sending module sends a first message, where the measurement configuration message includes the measurement threshold.

In a possible implementation, the measurement configuration message further includes at least one of the following: a first triggering condition of performing relay discovery and a second triggering condition of reporting a candidate second terminal device.

In a possible implementation, the first triggering condition includes that signal quality of a serving cell of the first terminal device is less than a first quality threshold; and
the second triggering condition includes that link quality between the first terminal device and the first network device is less than a second quality threshold.

In a possible implementation mode, the sending module 801 is specifically configured to:
send the solicitation message after determining that the first triggering condition is satisfied.

In a possible implementation mode, the sending module 801 is further configured to:
send a measurement report message to the first network device, where the measurement report message includes identification information of at least one third terminal device and identification information of a second network device that each third terminal device belongs to, and the third terminal device being a terminal device serving as a candidate relay in the at least one second terminal device.

In a possible implementation, the measurement report message further includes a measurement result corresponding to each third terminal device. The first terminal device further includes a processing module, configured to:
measure the response message sent by the at least one second terminal device, to determine a measurement result corresponding to each second terminal device; and
determine the at least one third terminal device according to the measurement result corresponding to each second terminal device and the measurement threshold.

In a possible implementation, the measurement result includes reference signal receiving power (RSRP) or reference signal receiving quality (RSRQ).

The first terminal device of the present embodiment may be configured to execute the technical solution in the method embodiment, and an implementation principle and technical effects thereof are similar, and will not be elaborated herein.

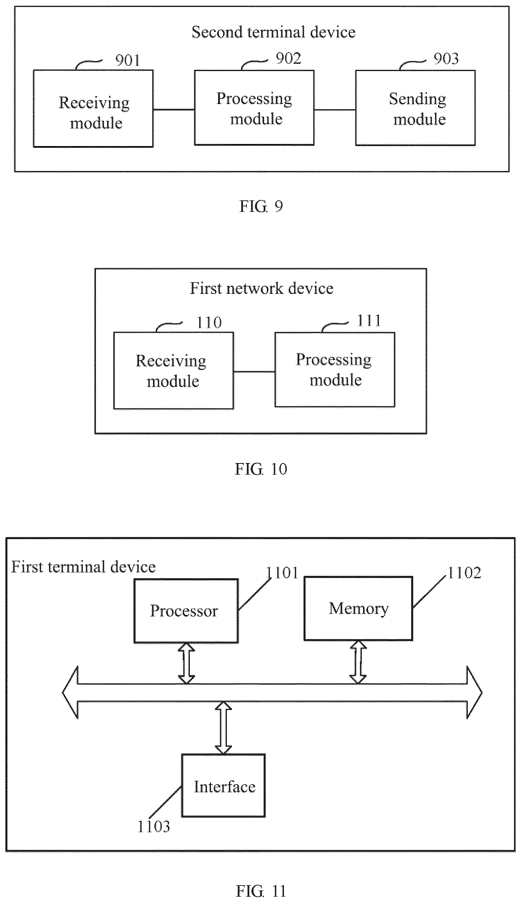

FIG. 9 is a structural diagram of an embodiment of a second terminal device according to the present application. As shown in FIG. 9, the second terminal device of the present embodiment includes:
a receiving module 901, configured to receive a first message from a first terminal device, the first message including a measurement threshold;
a processing module 902, configured to measure the first message to obtain a measurement result corresponding to the first terminal device; and
a sending module 903, configured to send a response message to the first terminal device if the measurement result corresponding to the first terminal device is greater than or equal to the measurement threshold.

In a possible implementation, the measurement result includes reference signal receiving power (RSRP) or reference signal receiving quality (RSRQ).

The second terminal device of the present embodiment may be configured to execute the technical solution in the method embodiment, and an implementation principle and technical effects thereof are similar, and will not be elaborated herein.

FIG. 10 is a structural diagram of an embodiment of a first network device according to the present application. As shown in FIG. 10, the first network device of the present embodiment includes:
a receiving module 110, configured to receive a measurement report message sent by a first terminal device, the measurement report message including identification information of at least one third terminal device and identification information of a second network device that each third terminal device belongs to, and the third terminal device being a terminal device serving as a candidate relay in at least one second terminal device; and
a processing module 111, configured to determine a target relay terminal device from the at least one third terminal device.

In a possible implementation, the measurement report message further includes a measurement result corresponding to each third terminal device. The processing module 111 is specifically configured to:
determine, by the first network device, the target relay terminal device from the at least one third terminal device, according to the measurement result corresponding to each third terminal device.

In a possible implementation, the processing module 111 is specifically configured to:
determine, by the first network device, the third terminal device corresponding to a maximum measurement result as the target relay terminal device.

In a possible implementation, further including:
a sending module, configured to send a measurement configuration message to the first terminal device, where the measurement configuration message includes the measurement threshold.

The first network device of the present embodiment may be configured to execute the technical solution in the method embodiment, and an implementation principle and technical effects thereof are similar, and will not be elaborated herein.

FIG. 11 is a structural diagram of another embodiment of a first terminal device according to the present application. As shown in FIG. 11, the first terminal device includes:
a processor 1101 and a memory 1102 configured to store an instruction executable for the processor 1101.

Optionally, the first terminal device may further include an interface 1103, configured to implement communication with other devices.

The above-mentioned components may communicate through one or more buses.

The processor 1101 is configured to execute the executable instruction to execute the corresponding method in the method embodiment for the above-mentioned first terminal device side, and a specific implementation process thereof may refer to the above-mentioned method embodiment, and will not be elaborated herein.

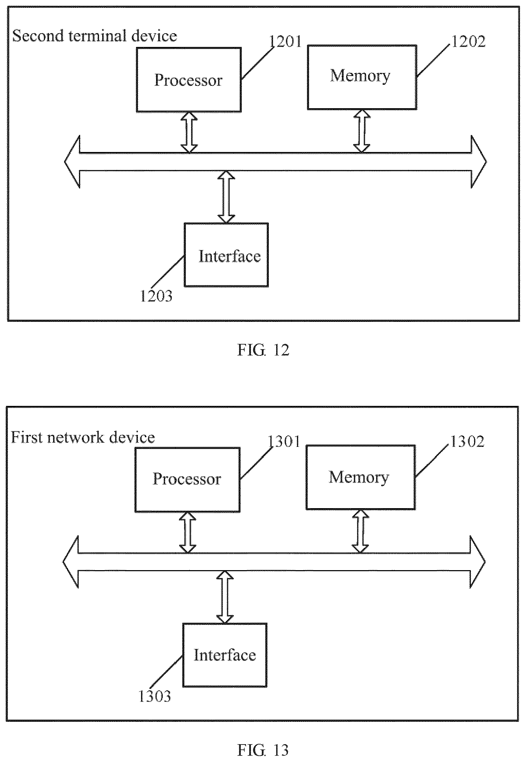

FIG. 12 is a structural diagram of another embodiment of a second terminal device according to the present application. As shown in FIG. 12, the second terminal device includes:
a processor 1201 and a memory 1202 configured to store an instruction executable for the processor 1201.

Optionally, the second terminal device may further include an interface 1203, configured to implement communication with other devices.

The above-mentioned components may communicate through one or more buses.

The processor 1201 is configured to execute the executable instruction to execute the corresponding method in the method embodiment for the above-mentioned second terminal device side, and a specific implementation process thereof may refer to the above-mentioned method embodiment, and will not be elaborated herein.

FIG. 13 is a structural diagram of another embodiment of a first network device according to the present application. As shown in FIG. 13, the first network device includes:
a processor 1301 and a memory 1302 configured to store an instruction executable for the processor 1301.

Optionally, the first network device may further include an interface 1303, configured to implement communication with other devices.

The above-mentioned components may communicate through one or more buses.

The processor 1301 is configured to execute the executable instruction to execute the corresponding method in the above-mentioned method embodiment for the first network device side, and a specific implementation process thereof may refer to the above-mentioned method embodiment, and will not be elaborated herein.

The structure of a second network device is similar to that of the first network device.

Optionally, the communication method described in the above-mentioned embodiments may be performed by a chip or a chip module.

The modules in the first terminal device and/or second terminal device described in the above-mentioned embodiments may be software modules, or hardware modules, or partially software modules and partially hardware modules. For example, each module in each apparatus and product applied to or integrated into a chip may be implemented by hardware such as a circuit. Alternatively, at least part of the modules may be implemented by software programs that run in a processor integrated into the chip, and the remaining part of the modules (if there are) may be implemented by hardware such as circuits. Each module in each apparatus and product applied to or integrated into a chip module may be implemented by hardware such as a circuit, and different modules may be in the same component (such as a chip and a circuit module) or different components of the chip module. Alternatively, at least part of the modules may be implemented by software programs that run in a processor integrated into the chip module, and the remaining part of the modules (if there are) may be implemented by hardware such as circuits. All modules in each apparatus and product applied to or integrated into a terminal may be implemented by hardware such as circuits, and different modules may be in the same component (such as a chip and a circuit module) or different components in the terminal. Alternatively, at least part of the modules may be implemented by software programs that run in a processor integrated into the terminal, and the remaining part of the modules (if there are) may be implemented by hardware such as a circuit.

An embodiment of the present application also provides a computer-readable storage medium, storing a computer program which, when executed by a processor, implements the corresponding method in the above-mentioned method embodiment. A specific implementation process thereof may refer to the above-mentioned method embodiment, and an implementation principle and technical effects thereof are similar, and will not be elaborated herein.

Other implementation solutions of the present disclosure are apparent to those skilled in the art upon considering the specification and practicing the invention disclosed herein. The present application is intended to cover any transformations, uses, or adaptive variations of the present disclosure, and these transformations, uses, or adaptive variations follow the general principle of the present disclosure, and include common general knowledge or conventional technical means undisclosed in the present disclosure in this art. The specification and the embodiments are only regarded as examples, and the practical scope and spirit of the present disclosure are specified in the appended claims.

It is to be understood that the present disclosure is not limited to the precise structures described above and shown in the drawings, and various modifications and variations may be made without departing from the scope thereof. The scope of the present disclosure is only defined by the appended claims.

## Claims

1. A communication method, comprising:
sending, by a first terminal device, a solicitation message, the solicitation message comprising a measurement threshold; and
receiving, by the first terminal device, a response message sent by at least one second terminal device, a signal measurement result of a link between the second terminal device and the first terminal device being greater than or equal to the measurement threshold.

2. The method according to claim 1, before sending, by the first terminal device, a first message, further comprising:
receiving, by the first terminal device, a measurement configuration message from a first network device, the measurement configuration message comprising the measurement threshold.

3. The method according to claim 2, wherein the measurement configuration message further comprises at least one of the following: a first triggering condition of performing relay discovery and a second triggering condition of reporting a candidate second terminal device.

4. The method according to claim 3, wherein,
the first triggering condition comprises that signal quality of a serving cell of the first terminal device is less than a first quality threshold; and
the second triggering condition comprises that link quality between the first terminal device and the first network device is less than a second quality threshold.

5. The method according to claim 3 or 4, wherein the sending, by the first terminal device, the solicitation message comprises:
sending, by the first terminal device, the solicitation message after determining that the first triggering condition is satisfied.

6. The method according to any one of claims 1-4, after receiving, by the first terminal device, the response message sent by at least one second terminal device, further comprising:
sending, by the first terminal device, a measurement report message to the first network device, the measurement report message comprising identification information of at least one third terminal device and identification information of a second network device that each third terminal device belongs to, and the third terminal device being a terminal device serving as a candidate relay in the at least one second terminal device.

7. The method according to claim 6, wherein the measurement report message further comprises a measurement result corresponding to each third terminal device, and before sending, by the first terminal device, the measurement report message to the first network device, the method further comprises:
measuring by the first terminal device, the response message sent by the at least one second terminal device, to determine a measurement result corresponding to each second terminal device; and
determining by the first terminal device, the at least one third terminal device according to the measurement result corresponding to each second terminal device and the measurement threshold.

8. The method according to any one of claims 1-4, wherein the measurement result comprises reference signal receiving power (RSRP) or reference signal receiving quality (RSRQ).

9. A communication method, comprising:
receiving, by a second terminal device, a first message from a first terminal device, the first message comprising a measurement threshold;
measuring by the second terminal device, the first message to obtain a measurement result corresponding to the first terminal device; and
sending, by the second terminal device, a response message to the first terminal device if the measurement result corresponding to the first terminal device is greater than or equal to the measurement threshold.

10. The method according to claim 9, wherein the measurement result comprises reference signal receiving power (RSRP) or reference signal receiving quality (RSRQ).

11. A communication method, comprising:
receiving, by a first network device, a measurement report message sent by a first terminal device, the measurement report message comprising identification information of at least one third terminal device and identification information of a second network device that each third terminal device belongs to, and the third terminal device being a terminal device serving as a candidate relay in at least one second terminal device; and
determining by the first network device, a target relay terminal device from the at least one third terminal device.

12. The method according to claim 11, wherein the measurement report message further comprises a measurement result corresponding to each third terminal device; and the determining by the first network device, the target relay terminal device from the at least one third terminal device comprises:
determining by the first network device, the target relay terminal device from the at least one third terminal device, according to the measurement result corresponding to each third terminal device.

13. The method according to claim 12, wherein determining the target relay terminal device from the at least one third terminal device comprises:
determining by the first network device, the third terminal device corresponding to a maximum measurement result as the target relay terminal device.

14. A first terminal device, comprising:
a processor, a memory, and an interface for communication with other devices;
the memory stores a computer-executable instruction; and
the processor executes the computer-executable instruction stored in the memory to enable the processor to perform the communication method according to any one of claims 1-8.

15. A second terminal device, comprising:
a processor, a memory, and an interface for communication with other devices;
the memory stores a computer-executable instruction; and
the processor executes the computer-executable instruction stored in the memory to enable the processor to perform the communication method according to any one of claims 9-10.

16. A first network device, comprising:
a processor, a memory, and an interface for communication with other devices;
the memory stores a computer-executable instruction; and
the processor executes the computer-executable instruction stored in the memory to enable the processor to perform the communication method according to any one of claims 11-13.

17. A computer-readable storage medium, storing a computer-executable instruction which, when executed by a processor, is used for implementing the communication method according to any one of claims 1-8, 9-10, and 11-13.
